# EUROPÄISCHE PATENTSCHRIFT

(11) **EP 1 296 043 B1**
(45) Veröffentlichungstag und Bekanntmachung des Hinweises auf die Patenterteilung: **15.02.2006**
(21) Anmeldenummer: 02450205.6
(22) Anmeldetag: 12.09.2002
(51) Int. Cl.: F02D 13/02, F02B 11/00, F02B 11/02, F02D 21/04, F02M 25/07, F01L 9/00

(54) **Brennkraftmaschine**
Internal combustion engine
Moteur à combustion interne

(30) Priorität: 25.09.2001 AT 7372001 U
(43) Veröffentlichungstag der Anmeldung: 26.03.2003
(73) Patentinhaber: AVL List GmbH, 8020 Graz (AT)
(72) Erfinder: Fürhapter, Alois, 8020 Graz (AT)
(74) Vertreter: Babeluk, Michael

(56) Entgegenhaltungen:
- EP-A- 0 961 018
- EP-A- 1 048 833
- DE-A- 19 923 413
- US-A- 6 105 550
- PATENT ABSTRACTS OF JAPAN vol. 1999, no. 14, 22. Dezember 1999 (1999-12-22) & JP 11 264319 A (NISSAN MOTOR CO LTD), 28. September 1999 (1999-09-28)

## Beschreibung

Die Erfindung betrifft eine Brennkraftmaschine, welche mit Otto-Kraftstoff in einem ersten Betriebsbereich selbstgezündet und einem zweiten Betriebsbereich fremdgezündet betreibbar ist, mit Mitteln zur Verstellung der Steuerzeiten zumindest eines Einlassventils und zumindest eines Auslassventils, mit mindestens einer Zünd- und mindestens einer direkten Einspritzeinrichtung pro Zylinder, wobei zur Betätigung der Einlassventile mindestens eine Einlassnockenwelle und zur Betätigung der Auslassventile mindestens eine Auslassnockenwelle vorgesehen ist.

Die Verbrennung eines durch Selbstzündung entflammten mageren Kraftstoff/Luft-Gemisches hat den Vorteil, dass wegen der homogenen Konzentrations- und Temperaturverteilung äußerst niedrige Emissionswerte für NOₓ und Ruß erzielt werden. Dieses Verfahren wird im englischen Sprachraum als "HCCI-Verfahren" (**H**omogenous **C**harge **C**ompression **I**gnition) bezeichnet. Der geringe Gehalt an NOₓ-Abgas resultiert beim HCCI-Verfahren daher, dass die Verbrennung an einer Vielzahl von Zündorten beginnt, wodurch die Verbrennung mit relativ geringer Verbrennungstemperatur abläuft. Benzin hat für das HCCI-Verfahren wegen seiner sehr niedrigen Selbstzündungswilligkeit und des niedriger liegenden Siedebereiches zwischen etwa 30° und 190° große Vorteile gegenüber Dieselkraftstoff. Das Verdichtungsverhältnis kann hier, ähnlich wie beim Dieselmotor, auf Werte von etwa 15 bis 17 angehoben werden. Da der genaue Zeitpunkt der Entflammung nur bei niedrigem effektivem Mitteldruck in erwünschter Weise kurz vor dem oberen Totpunkt fixiert werden kann, ist allerdings der erreichbare effektive Mitteldruck beim HCCI-Verfahren in nachteiliger Weise auf den Teillastbereich beschränkt, wie aus der Veröffentlichung "An Experimental Study on Premixed-Charge Compression Ignition Gasoline Engine", Taro Aoyama et al., SAE 960081, hervorgeht.

Die DE 199 27 479 A1 beschreibt ein Verfahren zum Betrieb einer mit Benzin betriebenen Brennkraftmaschine, welches vorsieht, dass die Brennkraftmaschine unterhalb eines vordefinierten Grenzwertes des effektiven Mitteldruckes homogen selbstgezündet und oberhalb des Grenzwertes fremdgezündet betrieben wird. Auf diese Weise lassen sich die Vorteile des HCCI-Verfahren ohne dessen Nachteile nutzen.

Die HCCI-Betriebsart ist in erster Linie dafür vorgesehen, Nieder- und Teillastgebiet abzudecken, während der fremdgezündete Motorbetrieb für die höhere Teillast sowie für die Volllast Verwendung findet. Im dynamischen Betrieb einer Brennkraftmaschine ist es unumgänglich zwischen beiden Betriebsarten während des Motorbetriebs zu wechseln, ohne gravierende Einbußen bei der Drehmomentabgabe in den Übergangsphasen zu generieren.

Aus der EP 1 085 192 A2 ist eine Brennkraftmaschine bekannt, welche im mittleren Teillastbereich homogen selbstgezündet und im oberen Teillastbereich, im Volllastbereich, aber auch im untersten Teillastbereich homogen fremdgezündet betrieben wird. Im Bereich des Umschaltens vom fremdgezündeten in den selbstgezündeten Betrieb wird die Menge an rückgeführtem Abgas erhöht, um eine sichere Selbstzündung zu gewährleisten. Umgekehrt wird beim Umschalten vom selbstgezündeten in den fremdgezündeten Betrieb die Menge an rückgeführtem Abgas rechtzeitig reduziert, um Klopferscheinungen zu vermeiden.

Aus der DE 196 02 013 A1 ist eine Hubumschaltvorrichtung bekannt, mit welcher zwischen verschiedenen Ventilhüben umgeschaltet werden kann. Auch ein Nullhub ist möglich.

Die EP 0 156 996 A1 beschreibt ein nockenbetätigtes Ventilsteuersystem mit elektrohydraulischen Ventilhubeinrichtungen, welche über einen Mikroprozessor angesteuert werden. Der Ventilhub lässt sich weitgehend flexibel gestalten.

Aus der US 5,647,312 A ist eine Viertakt-Brennkraftmaschine mit einer Hybridsteuerung bekannt, welche ein Haupt- und ein Nebeneinlassventil aufweist. Das nockenbetätigte Haupteinlassventil kann über ein Schaltelement im Übertragsweg zwischen Einlassnocken und Ventilschaft abgeschaltet werden. Der Ventilhub des Nebeneinlassventils kann über eine Betätigungseinrichtung in Abhängigkeit der Motorlast verändert werden.

In der DE 43 17 607 A1 und der AT 4.872 U1 sind variable Ventiltriebe für Hubventile beschrieben, welche jeweils ein in einem Tassenstößel angeordnetes hydraulisches Betätigungsglied aufweisen. Mit diesem kann zusätzlich zum durch den Nocken vorgegebenen mechanischen Hub ein hydraulischer Zusatzhub erzeugt werden. Insbesondere der in der Gebrauchsmusteranmeldung gezeigte Ventiltrieb ist dazu geeignet, unabhängig von der Stellung der Nockenwelle den hydraulischen Hub zu erzeugen, also beispielsweise auch zur Betätigung eines Auslassventils während der Einlassphase zwecks Restgasrückführung.

Die US 6,105,550 A offenbart ein Verfahren zum Betreiben einer Brennkraftmaschine mit einem homogenen Magergemisch aus Luft, Kraftstoff und Restgas, sowie mit Kompressionszündung und Direktkraftstoffeinspritzung in den Brennraum. Die Brennkraftmaschine wird dabei im Teillastbereich mit Kompressionszündung und mechanisch gesteuerter Abgasrückhaltung und bei Volllast fremdgezündet betrieben.

Aus der DE 199 23 413 A1 ist ein Verfahren zum Betrieb einer im Viertakt arbeitenden Hubkolbenbrennkraftmaschine mit wechselnder Kompressions- und Fremdzündung bekannt, wobei bei niedriger und mittlerer Last ein teilhomogenes, mageres Grundgemisch aus Luft, Kraftstoff und rückgehaltenem Abgas für die Kompressionszündung gebildet und bei hoher Teillast und Volllast ein homogenes, stöchiometrisches Gemisch für die Fremdzündung gebildet wird. Ferner erfolgt eine Abgasrückhaltung, ein Abgasaufstau und eine Aktivierungseinspritzung in das rückgehaltene Abgas. Damit der Übergang zwischen den beiden Betriebsarten ruckfrei erfolgt, wird neben dem abgestimmten Zusammenwirken von Abgasrückhaltung, Abgasaufstau, Drosselung der Frischladung und von dem Zündwinkel der Fremdzündung, sowie von Menge und Zeitpunkt der Kraftstoffeinspritzung auch eine Abgasrückführung benutzt.

Die EP 0 961 018 A1 beschreibt eine relativ aufwendige Abgasrückführeinrichtung mit einer hydraulischen Betätigung zumindest eines Auslassventils, welche der mechanischen Nockenbetätigung überlagert wird.

Bekannte Brennkraftmaschinen, welche mit Kraftstoff für Otto-Motoren sowohl im Selbstzündungsbetrieb, als auch im Fremdzündungsbetrieb arbeiten, sind mit einer Einrichtung zur Realisierung eines voll variablen Ventiltriebes und einer verbrennungsgeführten Motorsteuerungseinrichtung ausgerüstet, um eine optimale Steuerung der Verbrennung und damit hohen Wirkungsgrad durch rasche Verbrennung sowie niedrigste NOₓ und Rußemissionen zu erreichen. Nachteilig ist allerdings der hohe Konstruktionsaufwand und die erheblichen Kosten.

Aufgabe der Erfindung ist es, eine Brennkraftmaschine zu entwickeln, mit welcher auf möglichst einfache Weise ein sicherer selbstgezündeter und fremdgezündeter Betrieb mit Otto-Kraftstoff erzielt werden kann.

Erfindungsgemäß wird dies dadurch erreicht, dass zumindest ein Einlassventil pro Zylinder durch eine Hubumschaltvorrichtung nur zwischen einer ersten und einer zweiten Hubstellung, umschaltbar ist, und dass zumindest ein Auslassventil durch eine Restgasrückführeinrichtung während des Einlasshubes betätigbar ist. Die Brennkraftmaschine weist somit einen einfachen Ventiltrieb mit einer Einlass- und einer Auslassnockenwelle auf. Die Hubumschaltung zwischen dem ersten kleinen Hub und dem zweiten großen Hub für zumindest ein Einlassventil erfolgt über eine einfache Hubumschaltvorrichtung, welche mechanisch, hydraulisch oder elektrisch betätigbar sein kann. Beispielsweise kann die Hubumschaltvorrichtung durch zwei Einlassnocken pro Einlassventil mit unterschiedlichem Hubverlauf realisiert werden.

Bei einer Brennkraftmaschine mit mindestens zwei Einlassventilen pro Zylinder ist vorzugsweise vorgesehen, dass ein Einlassventil durch die Hubumschaltvorrichtung zwischen erstem und zweitem Hub umschaltbar ist, und dass das andere Einlassventil durch eine Ventilabschaltvorrichtung abschaltbar ist. Alternativ dazu kann auch bei einer Brennkraftmaschine mit zwei getrennten Einlasskanälen vorgesehen sein, dass beide Einlassventile durch die Hubumschaltvorrichtung zwischen erstem und zweitem Hub umschaltbar sind, und dass ein Einlasskanal pro Zylinder über ein Steuerorgan abschaltbar ist.

Im ersten Motorbetriebsbereich wird der Hub zumindest eines Einlassventils von einer zweiten Hubstellung in eine erste Hubstellung reduziert. Im zweiten Motorbetriebsbereich wird der Hub dieses Einlassventils wieder von der ersten Hubstellung in die zweite Hubstellung erhöht. Die Füllung des Zylinders wird dabei vorteilhaft über die Drosselklappe gesteuert. Dabei kann auch vorgesehen sein, dass die Brennkraftmaschine in einem Übergangsbereich zwischen ersten und zweiten Betriebsbereich mit einem Luft/Kraftstoff-Verhältnis λ=1 betrieben wird, wobei der Hub zumindest eines Einlassventils in die erste Hubstellung geschaltet wird.

Um die Verbrennung insbesondere beim Umschalten vom fremdgezündeten in den selbstgezündeten Betrieb zu stabilisieren, kann der Öffnungszeitpunkt im ersten Motorbetriebsbereich kurzfristig in Richtung des oberen Totpunktes der Zündung verschoben werden. Dies bewirkt eine erhöhte Turbulenz im Brennraum, welche die Verbrennungslage vorverlegt. Dies kann erreicht werden, wenn die Einlassnockenwelle durch einen Einlassphasenschieber verdrehbar ist.

Um die für eine sichere Selbstzündung erforderliche Temperaturerhöhung der Ladung zu erreichen, ist vorgesehen, dass im ersten Motorbetriebsbereich zumindest ein Auslassventil pro Zylinder während des Einlasstaktes geöffnet wird, wobei die Steuerung der Restgasrückführung zumindest durch die Phasenlage dieses zweiten Auslasshubes erfolgt, wobei zur Durchsetzung dieses Verfahrensschrittes vorgesehen ist, dass die Restgasrückführeinrichtung einen Auslassphasenschieber aufweist, durch welchen die Auslassnockenwelle verdrehbar ist. Eine besonders flexible Regelung der Verbrennung lässt sich erreichen, wenn das zweite Auslassventil während des Einlasstaktes hydraulisch oder elektrisch betätigt wird, wobei vorzugsweise die Phasenlage und die Öffnungsdauer variiert wird. Besonders vorteilhaft ist es, wenn die Dauer und/oder Lage des zweiten Auslasshubes zylinderindividuell angepasst wird, wobei vorzugsweise durch Anpassen der Dauer und/oder Lage des zweiten Auslasshubes zylinderindividuell die Verbrennungslage und die Brenngeschwindigkeit des jeweiligen Zylinders geregelt wird. Durch Anpassen des zweiten Auslasshubes in Dauer und/oder Lage kann insbesondere bei instationärer Betriebsweise die Verbrennungsstabilität verbessert werden. Auch im fremdgezündeten Übergangsbereich kann durch die interne Restgasrückführeinrichtung eine Entdrosselung und somit Verbrauchsreduzierung erreicht werden.

Im Vergleich zu einem voll variablen Ventiltrieb ist die vorgeschlagene Konstruktion und das beschriebene Verfahren einfach und kostengünstig. Es ermöglicht den Selbstzündungsbetrieb bei Teillast durch hohe interne Restgasraten.

Da die Gaswechselventile in konventioneller Weise mechanisch betätigt werden, hat die Öltemperatur keinen Einfluss auf die Ventilbetätigung. Dies hat den Vorteil, dass der Kaltstart in konventioneller Weise fremdgezündet durchgeführt werden kann.

Die mechanische Ventilbetätigung ermöglicht hohe Drehzahlen und hohe Lasten konventionell mit großem Hub, wodurch nur geringste Reibungsverluste entstehen und ein uneingeschränkter Volllastbetrieb möglich ist.

Durch die Hubumschaltung im fremdgezündeten Betrieb bei niedriger und mittlerer Teillast und durch die interne Restgassteuerung kann ein besonders niedriger Kraftstoffverbrauch und sehr niedrige Emissionen erreicht werden.

Die Erfindung wird im Folgenden anhand der Figuren näher erläutert. Es zeigen
- Fig. 1: ein Motorkennfeld mit den unterschiedlichen Betriebsbereichen,
- Fig. 2: ein Ventilhub-Kurbelwinkeldiagramm für Volllast und hohe Teillast,
- Fig. 3: ein Ventilhub-Kurbelwinkeldiagramm für mittlere Teillast,
- Fig. 4: ein Ventilhub-Kurbelwinkeldiagramm für den ersten Motorbetriebsbereich in einer ersten Ausführungsvariante,
- Fig. 5: ein Ventilhub-Kurbelwinkeldiagramm für den ersten Motorbetriebsbereich in einer zweiten Ausführungsvariante und
- Fig. 6: eine Ventilbetätigungseinrichtung einer erfindungsgemäßen Brennkraftmaschine in einer schematischen Darstellung.

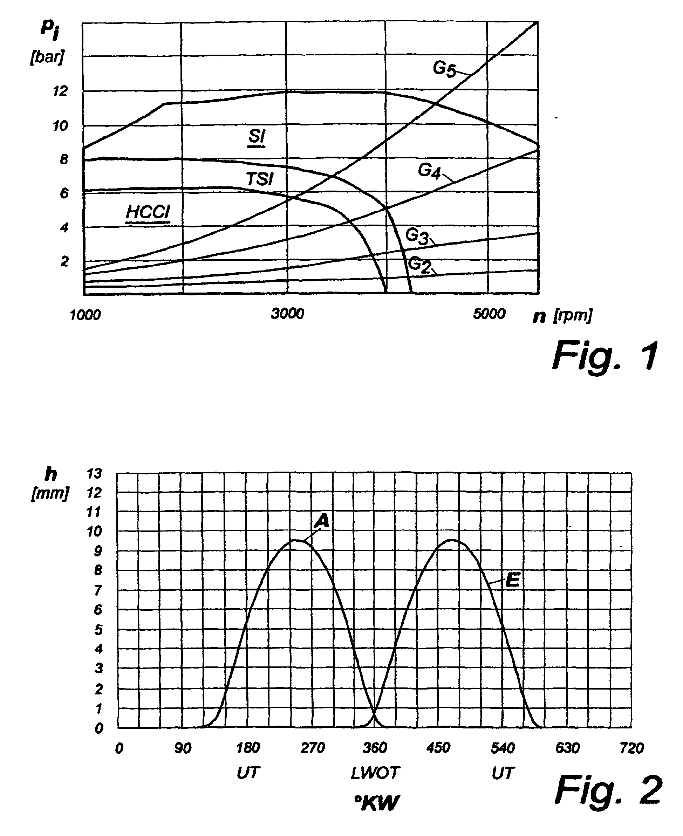

Im in Fig. 1 gezeigten Kennfeld ist der indizierte Zylinderdruck pᵢ über der Drehzahl n aufgetragen. Im ersten Motorbetriebsbereich HCCI wird die Brennkraftmaschine homogen selbstgezündet mit einem Luft/Kraftstoff-Verhältnis λ ≥ 1 betrieben. Dieser erste Motorbetriebsbereich HCCI reicht vom unteren bis zum mittleren Teillastbereich. Im zweiten Motorbetriebsbereich SI wird die Brennkraftmaschine fremdgezündet mit einem Luft/Kraftstoff-Verhältnis λ ≤ 1 betrieben. Dieser zweite Motorbetriebsbereich SI reicht von hoher Teillast bis zur Volllast.

Zwischen dem ersten Motorbetriebsbereich HCCI und dem zweiten Motorbetriebsbereich SI liegt ein Übergangsbereich TSI, in welchem die Brennkraftmaschine fremdgezündet mit einem Luft/Kraftstoff-Verhältnis λ=1 betrieben wird. Dieser Übergangsbereich liegt im Bereich der mittleren Teillast. Im Kaltstart- und Warmlaufbetrieb wird der Übergangsbereich TSI bis zum Leerlaufbetriebsbereich ausgedehnt und tritt an die Stelle des ersten Motorbetriebsbereiches HCCI. Im Motorbetriebsbereich TSI kann durch die interne Restgasrückführeinrichtung eine weitere Entdrosselung und somit Verbrauchsreduzierung erreicht werden. Die internen Restgasmengen sind dabei jedoch deutlich niedriger als im Motorbetriebsbereich HCCI.

Fig. 2 zeigt die Steuerzeiten bei Volllast und hoher Teillast, wobei der Ventilhub h der Auslassventile und der Einlassventile dargestellt ist. Mit Bezugszeichen A ist die Ventilhubkurve der Auslassventile, mit Bezugszeichen E die Ventilhubkurve der Einlassventile eingezeichnet. Im zweiten Motorbetriebsbereich SI wird die Brennkraftmaschine im normalen, fremdgezündeten Betrieb mit einem Luft/Kraftstoff-Verhältnis λ ≤ 1 betrieben. Die Einlassventile sind auf den zweiten, maximalen Hub h geschaltet, wodurch maximale, über eine Drosselklappe zusätzlich gesteuerte Füllung gewährleistet ist. Die Auslassventile werden standardmäßig nur während der Auslassphase betätigt. Das zweitmalige Auslassöffnen ist deaktiviert. Mit UT ist der untere Totpunkt, mit LWOT der Ladungswechsel-Obere-Totpunkt bezeichnet.

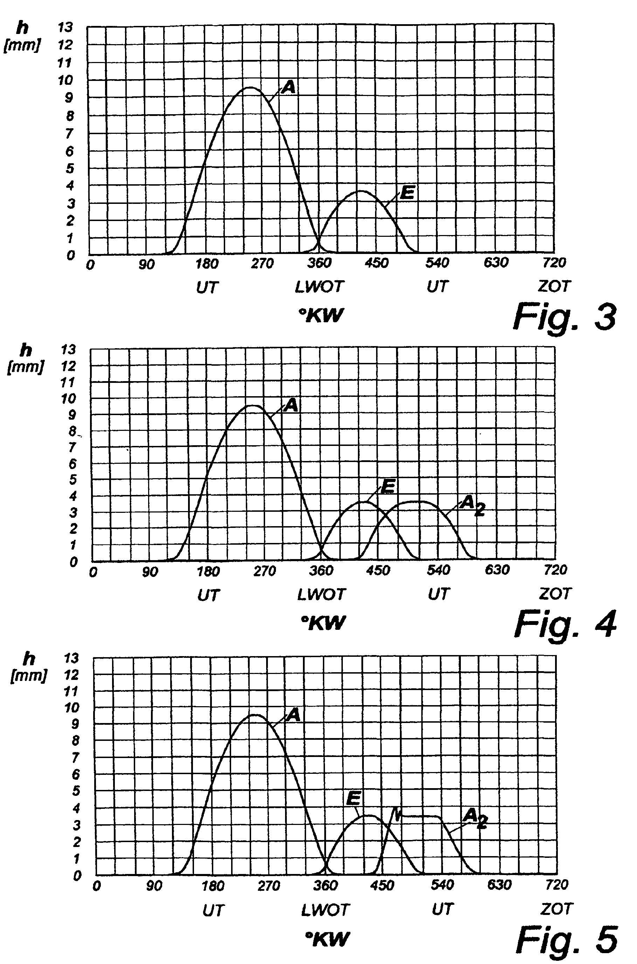

Fig. 3 zeigt die Steuerzeiten der Auslassventile bei mittlerer Teillast im Zwischenmotorbetriebsbereich TSI. Die Einlassventile sind auf den ersten, minimalen Hub umgeschaltet, wodurch sich der in Fig. 3 ersichtliche kleine Ventilhub E ergibt. Die Steuerung der Füllung erfolgt über die Drosselklappe. Der Beginn des Einlassöffnens kann zur Turbulenzgenerierung in Richtung des oberen Totpunktes ZOT der Zündung verschoben werden. Durch die erzeugte höhere Turbulenz wird die Brenngeschwindigkeit erhöht. Das Auslassventil wird standardmäßig nur während der Auslassphase geöffnet.

Fig. 4 zeigt die Steuerzeiten während des ersten Motorbetriebsbereiches HCCI. Die Einlassventile sind, wie in Fig. 3 auf die erste, minimale Hubstellung geschaltet. Um die für die Selbstzündung notwendigen Bedingungen zu schaffen, werden die Auslassventile während des Einlasstaktes ein zweites Mal geöffnet, wie durch die Kurve A₂ angedeutet ist. Dadurch werden Restgase in den Brennraum zurückgesaugt, was sich temperaturerhöhend für die nächste Verbrennung auswirkt. Die Steuerung des Restgases erfolgt in diesem Ausführungsbeispiel nur über die Phasenlage.

Fig. 5 zeigt die Steuerzeiten im ersten Motorbetriebsbereich HCCI in einer zweiten Ausführungsvariante. Auch hier werden die Einlassventile nur mit minimalem Ventilhub betätigt. Zum Unterschied zu Fig. 4 kann der zweite Auslassventilhub gemäß der Linie A₂, hinsichtlich der Lage und der Länge variiert werden, wodurch sich höhere Flexibilität in der Restgassteuerung ergibt. Somit ist eine zylinderindividuelle Verstellung möglich. Die Betätigung des zweiten Auslassventilhubes kann hydraulisch oder elektrisch erfolgen.

Die in Fig. 4 dargestellte Ausführung hat den Vorteil, dass es sich um eine sehr kostengünstige, reinmechanische Lösung handelt, bei der keine Hochdruckölversorgung nötig ist. Das System kann mit minimalen Reibungsverlusten betrieben werden.

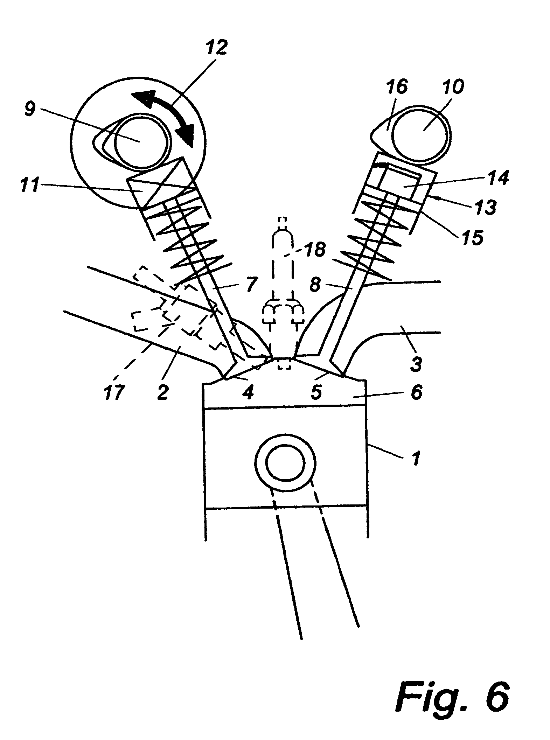

Fig. 6 zeigt eine Ausführungsvariante eines Ventiltriebskonzeptes einer erfindungsgemäßen Brennkraftmaschine, welche im ersten Motorbetriebsbereich HCCI selbstgezündet und im zweiten Motorbetriebsbereich SI fremdgezündet betreibbar ist, in einer schematischen Schnittdarstellung durch einen Zylinder 1. Mit Bezugszeichen 17 ist eine direkt in den Brennraum 6 mündende Einspritzeinrichtung und mit Bezugszeichen 18 eine Zündeinrichtung angedeutet. In den Zylinder 1 münden zwei Einlasskanäle 2 und zumindest ein Auslasskanal 3, deren Mündungen 4, 5 in den Brennraum 6 durch je ein Einlassventil 7 beziehungsweise Auslassventil 8 gesteuert werden, wobei die Einlassventile 7 durch eine Einlassnockenwelle 9 und die Auslassventile 8 durch eine Auslassnockenwelle 10 betätigt werden. Der Hub zumindest eines Einlassventils 7 ist durch eine Hubumschaltvorrichtung 11, wie sie etwa aus der DE 196 02 013 A1 bekannt ist, zwischen einem ersten und einem zweiten Hub umschaltbar. Zur Verstellung der Steuerzeiten der Einlassventile 7 kann darüber hinaus die Einlassnockenwelle 12 verdreht werden.

Zur Durchführung einer internen Restgasrückführung ist zumindest ein Auslassventil 8 während des Einlasshubes durch eine Restgasrückführeinrichtung 13 betätigbar. Die Restgasrückführeinrichtung 13 kann ein hydraulisch oder elektrisch aktivierbares Betätigungsglied 14 innerhalb des Tassenstößels 15 aufweisen, mit welchem - unabhängig vom durch den Auslassnocken 16 vorgegebenen mechanischen Auslasshub - ein zusätzlicher Hub des Auslassventils 8 während der Einlassphase erzeugt werden kann. Eine derartige Einrichtung wird in der AT 4.872 U1 beschrieben.

## Patentansprüche

1. Brennkraftmaschine, welche mit Otto-Kraftstoff in einem ersten Betriebsbereich (HCCI) selbstgezündet und einem zweiten Betriebsbereich (SI) fremdgezündet betreibbar ist, mit Mitteln zur Verstellung der Steuerzeiten zumindest eines Einlassventils (7) und zumindest eines Auslassventils (8), mit mindestens einer Zünd- (18) und mindestens einer direkten Einspritzeinrichtung (17) pro Zylinder (1), wobei zur Betätigung der Einlassventile (7) mindestens eine Einlassnockenwelle (9) und zur Betätigung der Auslassventile (8) mindestens eine Auslassnockenwelle (10) vorgesehen ist, **dadurch gekennzeichnet, dass** zumindest ein Einlassventil (7) pro Zylinder (1) durch eine Hubumschaltvorrichtung (11) nur zwischen einer ersten und einer zweiten Hubstellung, umschaltbar ist, und dass zumindest ein Auslassventil (8) durch eine Restgasrückführeinrichtung (13) während des Einlasshubes betätigbar ist.

2. Brennkraftmaschine nach Anspruch 1 mit mindestens zwei Einlassventilen (7) pro Zylinder (1), **dadurch gekennzeichnet, dass** ein Einlassventil (7) durch die Hubumschaltvorrichtung (11) zwischen erstem und zweitem Hub umschaltbar ist, und dass das andere Einlassventil durch eine Ventilabschaltvorrichtung abschaltbar ist.

3. Brennkraftmaschine nach Anspruch 1 mit zwei Einlassventilen (7) pro Zylinder (1), zu welchem je ein Einlasskanal (2) führt, **dadurch gekennzeichnet, dass** beide Einlassventile (7) durch die Hubumschaltvorrichtung (11) zwischen erstem und zweitem Hub umschaltbar sind, und dass ein Einlasskanal (2) pro Zylinder (1) über ein Steuerorgan abschaltbar ist.

4. Brennkraftmaschine nach einem der Ansprüche 1 bis 3, **dadurch gekennzeichnet, dass** die Einlassnockenwelle (9) durch einen Einlassphasenschieber (12) verdrehbar ist.

5. Brennkraftmaschine nach einem der Ansprüche 1 bis 4, **dadurch gekennzeichnet, dass** die Restgasrückführeinrichtung (13) einen Auslassphasenschieber aufweist, durch welchen die Auslassnockenwelle (10) verdrehbar ist.

6. Brennkraftmaschine nach einem der Ansprüche 1 bis 5, **dadurch gekennzeichnet, dass** die Restgasrückführeinrichtung (13) zumindest für ein Auslassventil (8) einen schaltbaren zweiten Auslassnocken zur Betätigung des Auslassventils (8) während des Einlasstaktes aufweist.

7. Brennkraftmaschine nach einem der Ansprüche 1 bis 6, **dadurch gekennzeichnet, dass** das Auslassventil (8) zumindest während des Einlasstaktes hydraulisch oder elektrisch betätigbar ist.

8. Verfahren zum Betrieb einer Brennkraftmaschine, welche mit Otto-Kraftstoff in einem ersten Betriebsbereich mit einem Luft/Kraftstoff-Verhältnis λ ≥ 1 selbstgezündet und in einem zweiten Betriebsbereich mit einem Luft/Kraftstoff-Verhältnis λ ≤ 1 fremdgezündet betrieben wird, wobei die Verbrennungslage zumindest über die interne Restgasrückführung geregelt wird, **dadurch gekennzeichnet, dass** eine Hubumschaltvorrichtung (11) zum Umschalten zumindest eines Einlassventils (7) pro Zylinder (1) zwischen nur einem ersten und einem zweiten Hub vorgesehen wird, dass im ersten Motorbetriebsbereich (HCCI) der Hub zumindest eines Einlassventils (7) von einer zweiten Hubstellung in eine erste Hubstellung reduziert wird und dass der Hub dieses Einlassventils (7) im zweiten Motorbetriebsbereich (SI) von der ersten Hubstellung in die zweite Hubstellung erhöht wird, und dass die Brennkraftmaschine in einem Übergangsbereich zwischen ersten (HCCI) und zweiten Betriebsbereich (SI) mit einem Luft/Kraftstoff-Verhältnis λ=1 fremdgezündet betrieben wird, wobei der Hub zumindest eines Einlassventils (7) in die erste Hubstellung geschaltet wird.

9. Verfahren nach Anspruch 8, **dadurch gekennzeichnet, dass** der Öffnungszeitpunkt im ersten Motorbetriebsbereich (HCCI) zur Regelung der Verbrennungsstabilität kurzfristig in Richtung des oberen Totpunktes (ZOT) der Zündung verschoben wird.

10. Verfahren nach Anspruch 8 oder 9, **dadurch gekennzeichnet, dass** im ersten Motorbetriebsbereich (HCCI) zumindest ein Auslassventil (8) pro Zylinder (1) während der Einlassphase geöffnet wird, wobei die Steuerung der Restgasrückführung zumindest durch die Phasenlage dieses zweiten Auslasshubes (8) erfolgt.

11. Verfahren nach Anspruch 10, **dadurch gekennzeichnet, dass** die Betätigung des zweiten Auslassventils (8) während des Einlasstaktes hydraulisch oder elektrisch erfolgt, wobei vorzugsweise die Phasenlage und/oder die Öffnungsdauer des Auslassventils (8) variiert wird.

12. Verfahren nach Anspruch 10 oder 11, **dadurch gekennzeichnet, dass** die Dauer und/oder Lage des zweiten Auslasshubes zylinderindividuell angepasst wird.

13. Verfahren nach Anspruch 12, **dadurch gekennzeichnet, dass** durch Anpassen der Dauer und/oder Lage des zweiten Auslasshubes zylinderindividuell die Verbrennungslage und die Brenngeschwindigkeit des jeweiligen Zylinders (1) geregelt wird.

## Claims

1. An internal combustion engine run on Otto fuel which may be compression ignition operated in a first operational range (HCCI) and spark ignition operated in a second operational range (SI), with means for adjusting valve timing of at least one intake valve (7) and of at least one exhaust valve (8), with at least one ignition equipment (18) and at least one direct injection equipment (17) in each cylinder (1), at least one intake camshaft (9) for actuating the intake valves (7) and at least one exhaust camshaft (10) for actuating the exhaust valves (8) being provided, **characterized in that** at least one intake valve (7) in each cylinder (1) is switchable between a first and a second lift position only by a device for changing the valve lift (11), and that at least one exhaust valve (8) is actuatable by a residual gas recirculation system (13) during the intake lift.

2. The internal combustion engine according to claim 1 with at least two intake valves (7) in each cylinder (1), **characterized in that** one intake valve (7) is switchable between the first and the second lift by means of the device for changing the valve lift (11) and that the other intake valve can be cut off by way of a valve cut-off device.

3. The internal combustion engine according to claim 1 with two intake valves (7) in each cylinder (1), one intake manifold (2) discharging into a respective one thereof, **characterized in that** the two intake valves (7) are switchable by the device for changing the valve lift (11) between the first lift and the second lift and that one intake manifold (2) in each cylinder (1) may be cut off by way of a control apparatus.

4. The internal combustion engine according to one of the claims 1 through 3, **characterized in that** the intake camshaft (9) is rotatable by an intake phase shifter (12).

5. The internal combustion engine according to one of the claims 1 through 4, **characterized in that** the recirculation system for the residual gas (13) is provided with an exhaust phase shifter for rotating the exhaust camshaft (10).

6. The internal combustion engine according to one of the claims 1 through 5, **characterized in that** the recirculation system for the residual gas (13) is provided, for at least one exhaust valve (8), with a switchable second exhaust cam for actuating said exhaust valve (8) during the intake stroke.

7. The internal combustion engine according to one of the claims 1 through 6, **characterized in that** the exhaust valve (8) is hydraulically or electrically actuatable, at least during the intake stroke.

8. A method of operating an internal combustion engine run on Otto fuel which is compression ignition operated in a first operational range with an air-fuel ratio λ ≥ 1 and spark ignition operated in a second operational range with an air-fuel ratio λ ≤ 1, combustion being controlled by the internal residual gas recirculation at least, **characterized in that** a device for changing the valve lift (11) of at least one intake valve (7) in each cylinder (1) is provided between a first and a second lift only, that, in the first operational range of the engine (HCCI), the lift of at least one intake valve (7) is reduced from a second lift position into a first lift position and that the lift of said intake valve (7) is increased from the first lift position to the second lift position in the second operational range of the engine (SI) and that, in a transition range between the first (HCCI) and the second (SI) operational range, the internal combustion engine is operated with an air-fuel ratio λ = 1, the lift of at least one intake valve (7) being switched to the first lift position.

9. The method according to claim 8, **characterized in that** the opening time in the first operational range of the engine (HCCI) is temporarily displaced toward the top dead center of ignition (ZOT) for controlling combustion stability.

10. The method according to claim 8 or 9, **characterized in that**, in the first operational range of the engine (HCCI), at least one exhaust valve (8) in each cylinder (1) is opened during the intake phase, the residual gas recirculation being controlled at least through the phase position of said second exhaust lift (8).

11. The method according to claim 10, **characterized in that** the second exhaust valve (8) is hydraulically or electrically actuated during the intake stroke, phase position and/or opening duration of the exhaust valve (8) being preferably varied.

12. The method according to claim 10 or 11, **characterized in that** the duration and/or position of the second exhaust lift is adjusted for each cylinder individually.

13. The method according to claim 12, **characterized in that** the combustion situation and the rate of combustion of the respective one of the cylinders is controlled by adjusting duration and/or position of the second exhaust lift for each cylinder (1) individually.

## Revendications

1. Moteur à combustible, à auto-allumage, avec un carburant pour cycle de Otto dans une première plage de fonctionnement (HCCI) et susceptible de fonctionner avec un allumage extérieur dans une deuxième plage de fonctionnement (SI) avec des moyens pour régler les temps de commande, d'au moins une soupape d'admission (7) et d'au moins une soupape d'échappement (8), avec au moins un dispositif d'allumage (18) et au moins un dispositif d'injection direct par cylindre (1), où, pour l'actionnement des soupapes d'admission (7) est prévu au moins un arbre à came d'admission (9) et, pour l'actionnement des soupapes d'actionnement (8), est prévu au moins un arbre à came d'échappement (10), **caractérisé en ce qu'**au moins une soupape d'admission (7) par cylindre (1) est commutable, au moyen d'un dispositif de commutation de levée (11), uniquement entre une première et une deuxième position en levée, et **en ce qu'**au moins une soupape d'échappement (8) est actionnable, au moyen d'un dispositif de recirculation des gaz résiduels (13), pendant la course d'admission.

2. Moteur à combustion interne selon la revendication 1, comprenant au moins deux soupapes d'admission (7) par cylindre (1), **caractérisé en ce qu'**une soupape d'admission (7) est commutable, au moyen du dispositif de commutation de levée (11), entre une première et une deuxième levée, et **en ce que** l'autre soupape d'admission est susceptible d'être mise hors service, au moyen d'un dispositif de mise hors service de soupape.

3. Moteur à combustion interne selon la revendication 1, comprenant deux soupapes d'admission (7) par cylindre (1), à chacune desquelles aboutit un canal d'admission (2), **caractérisé en ce que** les deux soupapes d'admission (7) sont susceptibles d'être commutées entre une première et une deuxième levée au moyen du dispositif de commutation de levée (11), et **en ce qu'**un canal d'admission (2) par cylindre (1) est susceptible d'être mis hors service, par l'intermédiaire d'un organe de commande.

4. Moteur à combustion interne selon l'une des revendications 1 à 3, **caractérisé en ce que** l'arbre à came d'admission (9) est susceptible de tourner, au moyen d'un déphaseur d'admission (12).

5. Moteur à combustion interne selon l'une des revendications 1 à 4, **caractérisé en ce que** le dispositif de recirculation des gaz résiduels (13) présente un déphaseur d'échappement, au moyen duquel l'arbre à came d'admission (10) est susceptible de tourner.

6. Moteur à combustion interne selon l'une des revendications 1 à 5, **caractérisé en ce que** le dispositif de recirculation des gaz résiduels (13) présente, au moins pour une soupape d'échappement (8), une deuxième came d'échappement, commutable pour l'actionnement de la soupape d'échappement (8) pendant le cycle d'admission.

7. Moteur à combustion interne selon l'une des revendications 1 à 6, **caractérisé en ce que** la soupape d'échappement (8) est actionnable hydrauliquement ou électriquement, au moins pendant le cycle d'admission.

8. Procédé de fonctionnement de moteur à combustion interne à auto-allumage avec un carburant pour cycle de Otto, dans une première plage de fonctionnement, avec un rapport air/carburant λ≥1, et fonctionnant en allumage externe dans une deuxième plage de fonctionnement, avec un rapport air/carburant λ≤1, la position de combustion étant réglée au moins par l'intermédiaire de la recirculation interne des gaz résiduels, **caractérisé en ce qu'**un dispositif de commutation de levée (11) est prévu pour commuter au moins une soupape d'admission (7) par cylindre (1) entre uniquement une première et une deuxième levée, **en ce que**, dans la première plage de fonctionnement moteur (HCCI), la levée d'au moins une soupape d'admission (7) est réduite, d'une deuxième position en levée à une première position en levée, et **en ce que** la levée de cette soupape d'admission (7) dans la deuxième plage de fonctionnement de moteur (SI) est augmentée, de la première position en levée à la deuxième position en levée, et **en ce que** le moteur à combustion interne fonctionne en un allumage extérieur, dans une plage de transition, entre la première plage de fonctionnement (HCCI) et une deuxième plage de fonctionnement (SI), avec un rapport air/carburant λ=1, sachant que la levée d'au moins une soupape d'admission (7) est commutée à la première position en levée.

9. Procédé selon la revendication 8, **caractérisé en ce que** le moment d'ouverture, dans la première plage de fonctionnement de moteur (HCCI), pour régler la stabilité de la combustion, est brièvement décalé dans la direction du point supérieur (ZOT) de l'allumage.

10. Procédé selon la revendication 8 ou 9, **caractérisé en ce que**, dans la première plage de fonctionnement de moteur (HCCI), au moins une soupape d'admission (8) par cylindre (1) est ouverte pendant la phase d'admission, la commande de la recirculation des gaz d'échappements se faisant au moins par la position en phase de cette deuxième levée d'échappement (8).

11. Procédé selon la revendication 10, **caractérisé en ce que** l'actionnement de la deuxième soupape d'échappement (8) pendant le cycle d'admission se fait de façon hydraulique ou électrique, sachant que, de préférence la position en phase et/ou la durée d'ouverture de la soupape d'échappement (8) est modifiée.

12. Procédé selon la revendication 10 ou 11, **caractérisé en ce que** la durée et/ou la position de la deuxième levée d'échappement est/sont adaptée(s) de façon individuelle au cylindre.

13. Procédé selon la revendication 12, **caractérisé en ce que** la position de combustion et la vitesse de combustion du cylindre (1) respectif sont régulées par une adaptation de la durée et/ou de la position de la deuxième levée d'échappement, individuellement par cylindre.
